# EUROPEAN PATENT SPECIFICATION

(11) **EP 2 591 528 B1**
(45) Date of publication and mention of the grant of the patent: **19.08.2015**
(21) Application number: 11749219.9
(22) Date of filing: 08.07.2011
(51) Int. Cl.: H02G 9/02, H02G 15/14

(54) **CABLE CONNECTION APPARATUS AND METHOD OF TERMINATING OR CONNECTING A CABLE IN SAID CABLE CONNECTION APPARATUS**
KABELVERBINDUNGSVORRICHTUNG UND VERFAHREN FÜR DEN ABSCHLUSS ODER ANSCHLUSS EINES KABELS BEI EINER DERARTIGEN KABELVERBINDUNGSVORRICHTUNG
APPAREIL DE CONNEXION DE CÂBLE ET METHODE DE TERMINAISON OU CONNEXION D'UN CABLE DANS LEDIT APPAREIL

(30) Priority: 09.07.2010 GB 201011593
(43) Date of publication of application: 15.05.2013
(73) Proprietor: J + S Limited, Barnstaple EX31 1LY (GB)
(72) Inventor: HUDD, Christopher Stephen, Barnstaple EX31 1LY (GB); WAGSTAFFE, David John Rhys, Barnstaple EX31 1LY (GB); ABRETTI, Eric Louis, Barnstaple EX31 1LY (GB)
(74) Representative: Wardle, Callum Tarn
(86) International application number: PCT/GB2011/051283
(87) International publication number: WO 2012/004608

(56) References cited:
- EP-A1- 1 383 205
- GB-A- 2 037 498
- US-A- 5 412 864
- US-B1- 6 499 891

## Description

### Background

The generation of electricity necessarily introduces the further requirement of electricity distribution. Conventionally this is achieved using power cables to provide connections between the electrical generator and the distribution network. Within the distribution network there will be a requirement to connect together many pairs of cables or to terminate cables in a safe manner. This is relatively easily achievable when the power cables are located on the shore, since the cables tend to be relatively easily located and easily worked upon.

However, there is currently an increasing interest in the use of off-shore electricity generation through, for example, off-shore wind, wave and tidal energy generation devices. In particular, there are currently various developmental projects for facilitating the research and development of off-shore power generation devices and these projects bring the requirement to be able to connect newly installed off-shore generation devices to a previously installed distribution system, or to be able to disconnect one or more devices from the distribution system in the event of the removal or replacement of those devices. Consequently, there is a need to provide apparatus and processes that enable such connections to be made or broken as easily as possible in off-shore conditions.

UK patent application GB 2037498(A) describes a separate electric coupling contained in a fluid-tight enclosure having in it, or in communication with it, a fluid reservoir of variable volume.

### Summary of the Invention

According to a first aspect of the present invention there is provided cable connection apparatus for enabling the termination or connection of underwater cables, the apparatus comprising: first and second outer frame plates each having an aperture arranged to receive a multicore cable; at least two bulkhead plates arranged between the first and second outer frame plates, each bulkhead plate having a plurality of apertures formed therein, each aperture being arranged to receive an individual core of the multicore cable; and a plurality of water tight cable housings, each cable housing extending between corresponding apertures in the bulkhead plates and arranged to enclose the individual cable core in a water tight manner.

In some embodiments each cable housing may have a waterproof flexible skin and may be filled with an incompressible fluid. The incompressible fluid is preferably a dielectric. Additionally, each cable housing may further include a perforated outer skin surrounding the flexible skin.

In other embodiments the apparatus may initially or alternatively include a pair of cable glands mounted to at least one of the bulkhead plates at either side of the cable core receiving apertures, each gland being arranged to receive an individual cable core in a fluid tight manner.

Additionally or alternatively, the apparatus may further include a cable clamp assembly mounted to at least one of the first or second outer frame plates and arranged to mechanically clamp the multicore cable received in the aperture of said respective outer frame plate.

According to a further aspect of the present invention there is provided a method of terminating a cable within the cable connection apparatus of claim 1, whereby the termination occupies the physical space between adjacent bulkhead plates, the cable having a central conductor, a semi-conducting layer surrounding the central conductor, a layer of insulation, a layer of semi-conducting screen surrounding the layer of insulation and a layer of metallic screen surrounding the insulation screen, the method comprising: cutting the cable to a predetermined length: stripping back a predetermined length of the metallic screen layer to expose the semi-conducting insulation layer, such that when the cable termination is formed the metallic screen layer does not pass through a bulkhead plate of the connection apparatus; removing a predetermined length of the semi-conducting insulation screen from the cut end of the cable to expose the insulation layer; removing a predetermined length of the insulation layer from the cut end of the cable shorter than the length of removed semi-conducting insulation screen to expose a length of the central conductor; wrapping a conductive material over the exposed central conductor; placing a cylindrical insulating rod over the conductive material such that the insulating rod buts against the exposed insulation layer; wrapping a void filler over the junction of the semi-conducting insulation screen and insulation layer and separately over the junction of the insulation layer and insulating rod; heat shrinking a length of stress control tubing over a portion of the insulating rod, exposed insulation and a portion of the semi-conducting screen and screened insulation sleeve; and connecting the stripped back metallic screen layer to the cable connection apparatus.

According to a further aspect of the present invention there is provided a method of jointing two cables within the cable connection apparatus of claim 1, whereby the joint occupies the physical space between adjacent bulkhead plates, each cable having a central conductor, a surrounding semi-conducting layer, a layer of insulation screen over the semi-conducting layer, a further layer of semi-conducting screen, and a layer a metallic screen over the further semi-conducting screen, the method comprising: performing the first four steps of the method of terminating a cable on each of the two cables; securing the exposed conductor of each cable into a respective opposite end of a tubular metallic cable connector; wrapping void filler over the junction of the semi-conducting insulation screen and insulation layer and separately over the junction of the insulation layer and the cable connector for each cable; heat shrinking a length of stress control tubing over the cable connector, exposed insulation of each cable and portion of semi-conducting screen of each cable; and performing the last three steps of the method of terminating a cable.

According to a further aspect of the present invention there is provided a method of terminating a fibre optic cable within the cable connection apparatus of claim 1, whereby the termination occupies the physical space between adjacent bulkhead plates, the method comprising; securing one or more fibre support trays to a cut end of the fibre optic cable; splicing a pigtail connector to each optic fibre within the cable, each pigtail connector being fastened to a connector plate supported by one or more rods extending an inner gland assembly of the connection apparatus; and securing each optic fibre and respective pigtail to one of said fibre support trays.

The method of terminating a fibre optic cable and may further comprise connecting pairs of the pigtail connectors with a respective optic fibre loop, thereby providing a looped termination of the fibre optic cable.

Alternatively, any method of terminating the fibre optic cable may further comprise connecting each pigtail connector to a corresponding pigtail connector of a further fibre optic cable terminated in an identical manner, thereby providing a method of connecting two fibre optic cables together.

Embodiments of the present invention are described below by way of non-limiting illustrative example only with reference to the accompany figures, of which:
Figure 1 is a general perspective view of the cable connection apparatus of the present invention;
Figure 2 schematically illustrates the various elements of the cable connection apparatus of Figure 1;
Figure 3 schematically illustrates one of the bulkhead plates of the cable connection apparatus;
Figure 4 schematically illustrates in cross section a cable termination according to an embodiment of the present invention;
Figure 5 schematically illustrates in cross section a cable connector for use with the present invention; and
Figure 6 schematically illustrates apparatus for terminating a fibre optic cable for use with the cable connection apparatus of Figure 1.

### Description of Embodiments of the Invention

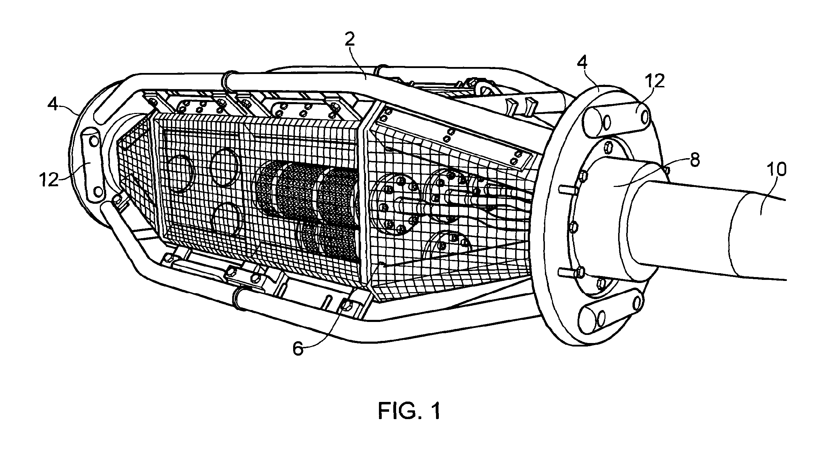

Figure 1 shows a general view of a cable connection apparatus according to an embodiment of the present invention. The apparatus comprises an outer frame 2 of four steel tubes extending between two outer frame plates 4. Connected to the outer frame and also arranged between the outer frame plates 4, are a number of bulkhead plates 6. In the particular arrangement shown in Figure 1, three bulkhead plates are provided. At least one of the outer frame plates 4 includes a cable clamp assembly 8 arranged to receive a multicore cable 10 and to mechanically clamp the multicore cable to the cable connection apparatus. A number of sacrificial anodes 12 may be fastened to the cable connection apparatus to inhibit corrosion of the apparatus when immersed in sea water, the actual number of anodes varying depending on the planned use of the apparatus, but typically being in the range 20 to 40 anodes.

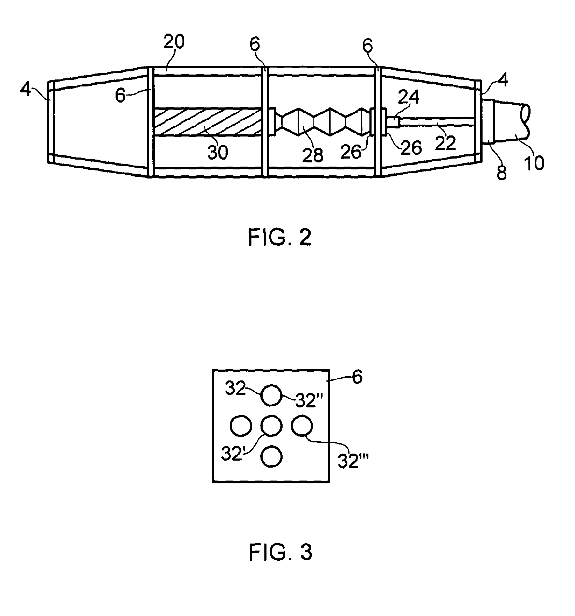

Figure 2 schematically illustrates selected parts of the apparatus shown in figure 1. Two outer frame plates 4 and three bulkhead plates 6 are shown attached to an internal frame 20 that serves to hold the respective outer frame plates and bulkhead plates in a spaced apart relationship and to also provide a means of securing them to the outer frame 2 of the apparatus (not shown in figure 2). A multicore cable 10 is illustrated clamped to one of the outer frame plates 4 by a cable clamp assembly 8. The multicore cable 10 will typically include five or six separate individual cores, typically three single phase power cables, one or two low voltage cables and a bundled fibre optic cable. For the purpose of clarity, in figure 2 only one of the single phase power cables 22 is illustrated. The multicore cable will also typically have armouring surrounding the individual cores and in preferred embodiments of the present invention it is the armouring, that is typically provided as a number of steel cables, that is secured to the outer frame plate by means of the cable clamping assembly 8. The individual cable core 22 extends from the outer frame plate 4 to the first of the bulkhead plates 6 and passes through an aperture provided within the bulkhead plate. The aperture and the bulkhead plate 6 has a cable gland 24 located at either side of the bulkhead plate and are mounted about the periphery of the aperture on either side of the bulkhead plate by a gland mount 26. The single core 22 passes through both glands. Each cable gland includes a pair of compression seals and provide a water tight seal about the cable core 22.

Having passed through the gland 24 in the first bulkhead plate 6, the individual cable core is either terminated or connected to a second cable core from a second multicore cable (not shown) fed through and secured to the opposite outer frame plate. The cable connection or termination therefore occupies the physical space between adjacent bulkhead plates. The termination or connection is enclosed in a water tight manner by a flexible housing 28, which in preferred embodiments is in the form of flexible rubber bellows. The interior of the flexible housing in which the cable connection or termination is located is subsequently filled with an incompressible fluid or gel. Consequently, the water pressure present when the cable connection apparatus is submerged is transmitted through the flexible housing 28 to the incompressible fluid contained therein and therefore to the outer compression seal of the first cable gland also located within the flexible housing. The outer compression seal of the second cable gland on the opposite side of the bulkhead plate is directly subject to the water pressure from the surrounding water and therefore equal but opposite pressures are exerted on each of the cable glands 24, thus further reducing the possibility of a water ingress through the cable glands. In addition to providing this pressure compensation, the flexible housing 28 and incompressible fluid/gel provide a degree of mechanical isolation of the cable joint or termination located within the flexible housing from any impact or vibrational forces experienced by the cable connection apparatus as a whole.

To provide further physical protection, the flexible housing is further enclosed by a rigid, perforated, outer skin 30. The outer skin may, for example, be manufactured from a stainless steel mesh. The rigidity of the outer skin 30 provides further physical protection of the flexible housing and cable connection/termination located inside, whilst the perforations in the outer skin equalise the water pressure on either side of the skin such that the outer skin does not have to withstand the water pressure and also allowing the water pressure to be transmitted to the flexible housing 28 to provide the pressure compensation discussed above. In figure 2, the outer skin 30 is not shown over the flexible housing 28 for the purposes of clarity. However, in some embodiments of the cable connection apparatus a second flexible housing may be located between second and third bulkhead plates and one such additional housing with a rigid outer skin 30 is illustrated. The second housing may be required when two cable cores are to be connected and insufficient space is available within a single housing.

Figure 3 schematically illustrates an end view of one of the bulkhead plates 6 and the individual apertures 32 for receiving each of the individual cores of the multicore cable. As illustrated in figure 3, the apertures 32 are provided in a symmetrical pattern. This allows the single phase power cores to be physically arranged so as to minimise electrical and magnetic imbalances. For example, each phase of a three-phase power cable may be directed through an aperture 32' at the centre of the bulkhead plate, and a further two adjacent apertures 32", 32"'.

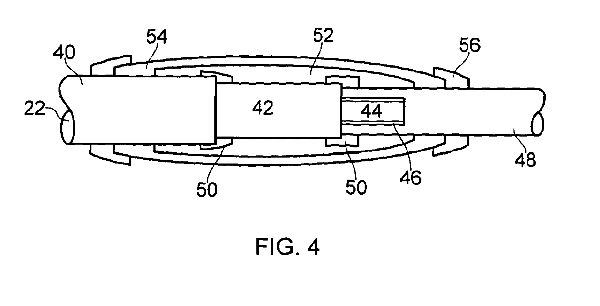

The physical arrangement of the cable connection apparatus in combination with a particular cable termination and connection method provide terminations and connections with a very low partial discharge (PD), or leakage current. Excessive leakage current can lead to localised heating of the cable termination or connection and surrounding structures and ultimately lead to dielectric breakdown of the termination or connection and its subsequent failure. By employing a particular cable termination and connection methodology, in combination with other physical features of the cable connection apparatus, partial discharge in embodiments of the present invention is minimised. Figure 4 schematically illustrates a cross-section of a cable termination according to an aspect of the present invention. The cable is prepared by cutting to a predetermined length, stripping back a length of the metallic screen layer (not illustrated) to expose the semi-conducting insulation screen 40, removing a length of the semi-conducting insulation screen from the cut end of the cable to expose a length of the insulation layer 42. A length of insulation layer is then removed from the end of the cable to expose a length of the central conductor 44. When removing the insulation screen care needs to be taken not to cut into or score the underlying insulation layer. A conductive material 46, such as, but not limited to, copper mesh, is subsequently wrapped around the exposed conductor 44 and an insulating rod 48 having a cylindrical cavity formed in one end is pushed over the conductive material to butt up against the cut face of the insulation 42. The conductive material 46 is wrapped in a sufficiently thick layer to form a tight fit with the cavity of the insulating rod. The insulating rod may be formed from nylon or polycarbonate in a manner know to those skilled in the art. Semi-conducting void filler is then separately wrapped over the junction of the semi-conducting insulation screen 40 and exposed insulation layer 42 and over the junction of the insulation layer 42 and insulating rod 48. A length of stress control tubing 52 is then heat shrunk over the exposed insulation layer 42 and adjoining portions of the insulation rod 48 and semi-conducting insulation screen 40. A screened insulation sleeve (dual wall tube) 54 is subsequently heat shrunk over the stress control tubing and semi-conductive tape 56 wrapped over the junction of the exposed semi-conducting insulation screen 40. The cable termination formed according to this process is located within the flexible housing 28 of the cable connection apparatus. The stripped metallic screen is stripped back sufficiently far from the termination such that it does not pass through the cable glands 24 into the flexible housing. The stripped back metallic screen is therefore electrically connected to a portion of the inner or alternatively outer frame of the cable connection apparatus, thus providing an electrical earth. The relationship between the lengths of stripped insulation and insulation screen contribute to the partial discharge performance of the cable termination, as does the placement of the stress control tubing and insulation sleeve. For example, it has been found that for cable provided by at least one manufacturer the respective measurements provide optimal partial discharge results; cutting the cable at 410mm from the cable gland, stripping the insulation screen beginning from 270mm from the cable gland, removing 60mm of the insulation from the cut end of the cable, applying 30mm of void filler over the insulation screen and insulation layer and 20mm of void filler of the insulation and insulating rod, locating the stress control tubing a distance of 230mm from the cable gland and positioning the screened insulation sleeve 10mm from the end of the stress control tube. Whilst these measurements are given as an illustrative example, it will of course be appreciated that these measurements may vary in relation to the specification of cable used and cable size.

In addition to the cable termination process described above contributing to the partial discharge performance of the cable termination, the incompressible fluid/gel used to fill the flexible housing 28 is also selected for its dielectric properties, as providing further electrical insulation and therefore further minimising potential leakage currents from the termination.

When it is required to connect two ends of separate cables such as is required to connect an electrical generating device to the distribution system, each end of the respective cables are prepared as described above in relation to a cable termination procedure. However, rather than fitting an insulating rod over the mesh covered conductors, a conductive connecting tube is located over both free ends of the respective cables and is securely mechanically fastened thereto, thus forming an electrical connection. The subsequent steps for applying void filler, stress control tubing, external insulative sleeving and semi-conducting tape as detailed above with respect to the cable termination procedure is subsequently carried out in an analogous fashion across the cable connection, such as when viewed in cross-section the conducting connector appears in the centre of the stress control tubing and outer sleeve.

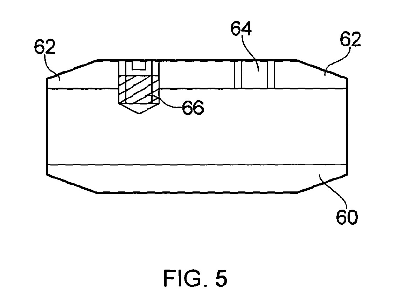

Figure 5 schematically illustrates a cable connector for use in jointing cables according to the above process. The cable connector comprises a tubular metallic body 60 with a central cylindrical passage arranged to receive the conducting cores from two cables to be jointed. The end sections 62 of the body 60 are tapered towards the free ends of the tubular body. This also contributes to the low partial discharge performance of the cable connection. Located towards either end of the tubular body 60 are a number of threaded holes 64 in the side walls of the tubular body. For example, a pair of threaded holes may be provided at either end. In this particular embodiment each threaded hole is arranged to receive a threaded grub screw 66. In use, each grub screw 66 is screwed into a threaded hole is at least flush with, or below, the outer surface of the tubular body 60 of the cable connector. Each grub screw 66 is dimensioned such that when it is flush with the outer surface of the cable connector a portion of the screw protrudes through to the inner tubular cavity in which the conducting cores of the cables are located and therefore engages with the cable cores, thus securing the cable cores within the cable connector. The length of the grub screws is calculated such that the gripping force exerted by the grub screw on the cable conductors when the grub screws are fastened flush with the outer surface of the cable connector is sufficient to securely hold the cables within the cable connector. By arranging for the grub screws to be screwed flush with, or below, the outer surface of the cable connection according to the method described above can be easily achieved whilst retaining good partial discharge performance. Furthermore, the clamping mechanism can be removed from the cable connector to allow the cable connection to be dismantled.

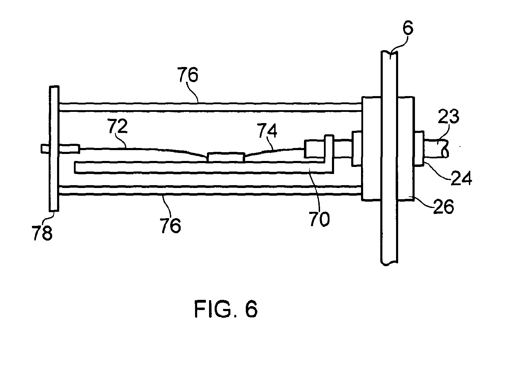

As previously mentioned, the mutlicore cables to be used with the cable connection apparatus of the present invention typically include at least one fibre optic bundle as one of the cores. Figure 6 schematically illustrates how a bundled fibre optic cable can be terminated within the cable connection apparatus of the present invention. The incoming fibre optic cable core 23 is fed through one of the apertures in a bulkhead plate 6 via a pair of opposing cable gland assemblies 24, 26 in an analogous fashion to that described in relation to figure 2. A fibre support tray 70 is fastened to the outside of the fibre optic cable such that the support tray extends beyond the cut end of the cable. For each of the individual optic fibres within the bundled core a pigtail connector 72 is spliced to the end of an optic fibre 74. Only a single spliced optic fibre and pigtail connector is illustrated in figure 6 for the purposes of clarity. The optic fibre 74 and pigtail connector 72 are arranged on and fastened to the support tray 70 so as to avoid tight bends in the fibre optic cables and to not restrict their movement on the support tray. One or more rigid rods 76 are secured to the inner gland assembly and extend substantially parallel to the fibre support tray and beyond the end of the support tray. Each pigtail connector is fastened to a connector plate 78 that is in turn supported by the rigid rods 76 such that the connector plate 78 is substantially parallel to the bulkhead plate 6. To terminate the fibre optic cable a looped connector is connected between respective pairs of pigtail connectors, the connections being made on the opposing face of the connector plate 78. To make a connection between two incoming fibre optic cables then corresponding pigtail connectors from each cable are connected together in an analogous fashion. The entire fibre optic assembly is subsequently encased in a rigid, water tight, housing that is secured between adjacent bulkhead plates in an analogous fashion to the flexible housing 28 illustrated in figure 2. In the event of the fibre optic cable being terminated the cable connection apparatus then one end of the rigid housing has a solid end cap to seal the housing, whereas in the event of two fibre optic cables being connected then an end cap is provided having an aperture to receive the second fibre optic cable.

Using the above described embodiments of the present invention a static cable from a distribution system can be terminated within the cable connection apparatus in such a manner that the cable can be energised and tested for partial discharge when deployed to establish the condition of the cable. When used for a cable termination a lifting eye can be secured to one of the outer frame plates for lifting the apparatus away from the desk of a deployment ship using a crane or winch and subsequently lowered into the sea. At a later date when it is desired to connect a supply cable from an electrical generator, such as a wave or tidal generator, the cable connection apparatus is lifted from the sea bed and the original cable termination dismantled and a new connection between the two cables made. Integration lifting eyes on the outer frame of the cable connection apparatus may then be used to lower the apparatus and spliced cables back to the sea bed, the original lifting eye having been removed from the outer frame plates to allow the second cable to be introduced to the apparatus and secured thereto. The cable connection apparatus and methods of forming cable connections and terminations described above therefore allow the safe termination of static cables and the connection of two separate cables in such a manner that the connections can be subsequently broken and remade as required, for example to facilitate the replacement of the electrical generating device or the reuse of the static distribution cable for a different electrical generating device. The frame allows a cable to be installed or retrieved by utilising the pulling eyes on the frame to allow the maximum pull load determined by the cable specification to be applied.

## Claims

1. Cable connection apparatus for enabling the termination or connection of underwater cables, the apparatus comprising:
first and second outer frame plates (4) each having an aperture arranged to receive a multicore cable (10);
at least two bulkhead plates (6) arranged between the first and second outer frame plates (4), each bulkhead plate having a plurality of apertures formed therein, each aperture being arranged to receive an individual core (22) of the multicore cable; and
a plurality of watertight cable housings (28), each cable housing extending between corresponding apertures in the bulkhead plates and arranged to enclose the individual cable core in a watertight manner.

2. The apparatus of claim 1, wherein each cable housing (28) comprises a waterproof flexible skin and is filled with an incompressible fluid.

3. The apparatus of claim 2, wherein each cable housing (28) may further comprises a perforated outer skin (30) surrounding the flexible skin.

4. The apparatus of any preceding claim, wherein a pair of cable glands (24) are mounted to at least one of the bulkhead plates (6) at either side of one of the cable core receiving apertures, each gland being arranged to receive an individual cable core (22) in a fluid tight manner.

5. The apparatus of any preceding claim, wherein further comprising a cable clamp assembly (8) mounted to at least one of the first and second outer frame plates (4) and arranged to mechanically clamp the multicore cable (10) received in the aperture of said respective outer frame plate.

6. A method of terminating a cable within the cable connection apparatus of claim 1, whereby the termination occupies the physical space between adjacent bulkhead plates, the cable having a central conductor (44), a layer of insulation (42) surrounding the central conductor (44), a layer of semi-conducting insulation screen (40) surrounding the layer of insulation (42) and a layer of metallic screen surrounding the semi-conducting insulation screen (40), method comprising:
i) cutting the cable to a predetermined length;
ii) stripping back a predetermined length of the metallic screen layer to expose the semi-conducting insulation screen (40), such that when the cable termination is formed the metallic screen layer does not pass through a bulkhead plate of the connection apparatus;
iii) removing a predetermined length of the semi-conducting insulation screen from the cut end of the cable to expose the insulation layer (42);
iv) removing a predetermined length of the insulation layer from the cut end of the cable shorter than the length of removed semi-conducting insulation screen (40) to expose a length of the central conductor (44);
v) wrapping a conductive material (46) over the exposed central conductor;
vi) placing a cylindrical insulating rod (48) over the conductive material such that the insulating rod butts against the exposed insulation layer;
vii) wrapping a void filler over the junction of the semi-conducting insulation screen (40) and insulation layer (42) and separately over the junction of the insulation layer (42) and insulating rod (48);
viii) heat shrinking a length of stress control tubing (52) over a portion of the insulating rod, exposed insulation and a portion of the semi-conducting insulation screen;
ix) heat shrinking a screened insulation sleeve (54) over the stress control tubing;
x) wrapping semi-conductive tape (56) over the junction of the exposed semi-conducting screen and screened insulation sleeve; and
xi) connecting the stripped back metallic screen layer to the cable connection apparatus.

7. A method of jointing two cables within the cable connection apparatus of claim 1, whereby the joint occupies the physical space between adjacent bulkhead plates, each cable having a central conductor (44), a layer of insulation (42) surrounding the central conductor (44), a layer of semi-conducting insulation screen (40) surrounding the layer of insulation (42) and a layer of metallic screen surrounding the semi-conducting insulation screen (40), the method comprising:
i) cutting each cable to a predetermined length;
ii) stripping back a predetermined length of the metallic screen layer on each cable to expose the semi-conducting insulation screen (40);
iii) removing a predetermined length of the semi-conducting insulation screen from the cut end of each cable to expose the insulation layer (42);
iv) removing a predetermined length of the insulation layer from the cut end of each cable shorter than the length of removed semi-conducting insulation screen (40) to expose a length of the central conductor (44);
v) securing the exposed conductor of each cable into a respective opposite end of a tubular metallic cable connector (60);
vi) wrapping void filler over the junction of the insulation screen and insulation layer and separately over the junction of the insulation layer and the cable connector for each cable;
vii) heat shrinking a length of stress control tubing (52) over the cable connector, exposed insulation of each cable and a portion of semi-conducting screen of each cable; and
viii) heat shrinking a screened insulation sleeve (54) over the stress control tubing;
ix) wrapping semi-conductive tape (56) over the junction of the exposed semi-conducting screen and screened insulation sleeve; and
x) connecting the stripped back metallic screen layer to the cable connection apparatus.

8. A method of terminating a fibre optic cable within the cable connection apparatus of claim 1, whereby the termination occupies the physical space between adjacent bulkhead plates, the method comprising :
i) securing one or more fibre support trays (70) to a cut end of the fibre optic cable (23);
ii) splicing a pigtail connector (72) to each optic fibre within the cable, each pigtail connector being fastened to a connector plate (78) supported by one or more rods (76) extending from an inner gland assembly of the connection apparatus; and
iii) securing each optic fibre (23) and respective pigtail (72) to one of said fibre support trays.

9. The method of claim 8 further comprising connecting pairs of the pigtail connectors with a respective optic fibre loop.

10. The method of claim 8 further comprising connecting each pigtail connector to a corresponding pigtail connector of a further fibre optic cable terminated according to the method of claim 8.

## Patentansprüche

1. Kabelverbindungsvorrichtung um den Abschluss oder die Verbindung von Unterwasserkabeln zu ermöglichen, wobei die Vorrichtung aufweist:
erste und zweite äußere Rahmenplatten (4), die jeweils eine Apertur aufweisen, die angeordnet ist, um ein Mehrkernkabel (10) aufzunehmen;
mindestens zwei Schottplatten (6) die zwischen den ersten und zweiten äußeren Rahmenplatten (4) angeordnet sind, wobei jede Schottplatte mehrere darin ausgebildete Aperturen aufweist, wobei jede Apertur angeordnet ist, um einen einzelnen Kern (22) des Mehrkernkabels aufzunehmen; und
mehrere wasserdichte Kabelgehäuse (28), wobei sich jedes Kabelgehäuse zwischen entsprechenden Aperturen in den Schottplatten erstreckt und angeordnet ist, um den einzelnen Kabelkern wasserdicht zu umhüllen.

2. Vorrichtung gemäß Anspruch 1, wobei jedes Kabelgehäuse (28) eine wasserdichte flexible Haut aufweist und mit einem inkompressiblen Fluid gefüllt ist.

3. Vorrichtung gemäß Anspruch 2, wobei jedes Kabelgehäuse (28) ferner eine perforierte Außenhaut (30) aufweisen kann, die die flexible Haut umgibt.

4. Vorrichtung gemäß einem der vorhergehenden Ansprüche, wobei ein paar Kabeldurchführungen (24) an mindestens einer der Schottplatten (6) an jeder Seite von einer der Kabelkern aufnehmenden Aperturen angebracht sind, wobei jede Durchführung angeordnet ist, um einen einzelnen Kabelkern (22) auf fluiddichte Weise aufzunehmen.

5. Vorrichtung gemäß einem der vorhergehenden Ansprüche, die ferner eine Kabeleinspannanordnung (8) aufweist, die an mindestens einer der ersten und zweiten Rahmenplatten (4) angebracht ist und angeordnet ist, um mechanisch das Mehrkernkabel (10) einzuspannen, das in der Apertur der jeweiligen äußeren Rahmenplatte aufgenommen ist.

6. Verfahren zum Abschließen eines Kabels innerhalb der Kabelverbindungsvorrichtung gemäß Anspruch 1, wobei das Abschließen den physikalischen Raum zwischen benachbarten Schottplatten in Anspruch nimmt, wobei das Kabel einen zentralen Leiter (44), eine Isolierschicht (42), die den zentralen Leiter (44) umgibt, eine Schicht halbleitenden Isolationsschirm (40), der die Isolierschicht (42) umgibt, und eine Schicht Metallschirm aufweist, der den halbleitenden Isolationsschirm (40) umgibt,
wobei das Verfahren umfasst:
i) Schneiden des Kabels auf eine vorbestimmte Länge;
ii) Ablösen einer vorbestimmten Länge der metallischen Schirmschicht zum Freilegen des halbleitenden Isolationsschirms (40) derart, dass, wenn der Kabelabschluss ausgebildet wird, die metallische Schirmschicht eine Schottplatte der Verbindungsvorrichtung nicht passiert;
iii) Entfernen einer vorbestimmten Länge des halbleitenden Isolationsschirms von dem abgeschnittenen Ende des Kabels um die Isolierschicht (42) freizulegen;
iv) Entfernen einer vorbestimmten Länge der Isolierschicht von dem abgeschnittenen Ende des Kabels kürzer als die Länge des entfernten halbleitenden Isolationsschirms(40) zum Freilegen einer Länge des zentralen Leiters (44);
v) Wickeln eines leitenden Materials (46) über den freigelegten zentralen Leiter;
vi) Platzieren einer zylindrischen Isolierstange (48) über dem leitenden Material derart, dass die Isolierstange an der freigelegten Isolierschicht anliegt;
vii) Wickeln eines Lückenfüllers über die Kontaktstelle des halbleitenden Isolationsschirms (40) und der Isolierschicht (42) und separat über die Kontaktstelle der Isolierschicht (42) und der Isolierstange (48);
viii) Wärmeschrumpfen einer Länge eines Feldsteuerschlauchs (52) über einen Abschnitt der Isolierstange, freigelegte Isolierung und einen Abschnitt des halbleitenden Isolationsschirms;
ix) Wärmeschrumpfen einer geschirmten Isolierhülse (54) über den Feldsteuerschlauch;
x) Wickeln von halbleitendem Band (56) über die Kontaktstelle des freigelegten halbleitenden Schirms und der geschirmten Isolierhülse; und
xi) Verbinden der abgelösten metallischen Schirmschicht mit der Kabelverbindungsvorrichtung.

7. Verfahren zum Verbinden von zwei Kabeln innerhalb der Kabelverbindungsvorrichtung von Anspruch 1, wobei die Verbindungsstelle den physikalischen Raum zwischen benachbarten Schottplatten in Anspruch nimmt, jedes Kabel einen zentralen Leiter (44), eine Isolierschicht (42), die den zentralen Leiter (44) umgibt, eine Schicht halbleitenden Isolationsschirm (40), der die Isolierschicht umgibt, und eine Schicht metallischen Schirm aufweist, der den halbleitenden Isolationsschirm (40) umgibt,
wobei das Verfahren umfasst:
i) Schneiden jedes Kabels auf eine vorbestimmte Länge;
ii) Ablösen einer vorbestimmten Länge der metallischen Schirmschicht auf jedem Kabel zum Freilegen des halbleitenden Isolationsschirms (40);
iii) Entfernen einer vorbestimmten Länge des halbleitenden Isolationsschirms von dem abgeschnittenen Ende jedes Kabels um die Isolierschicht (42) freizulegen;
iv) Entfernen einer vorbestimmten Länge der Isolierschicht von dem abgeschnittenen Ende jedes Kabels kürzer als die Länge des entfernten halbleitenden Isolationsschirms(40) zum Freilegen einer Länge des zentralen Leiters (44);
v) Fixieren des freigelegten Leiters jedes Kabels in ein jeweiliges gegenüberliegendes Ende eines rohrförmigen metallischen Verbinders (60);
vi) Wickeln eines Lückenfüllers über die Kontaktstelle des halbleitenden Isolationsschirms und der Isolierschicht und separat über die Kontaktstelle der Isolierschicht und des Kabelverbinders für jedes Kabel;
vii) Wärmeschrumpfen einer Länge eines Feldsteuerschlauchs (52) über den Kabelverbinder, freigelegte Isolierung jedes Kabels und einen Abschnitt des halbleitenden Isolationsschirms jedes Kabels;
viii) Wärmeschrumpfen einer geschirmten Isolierhülse (54) über den Feldsteuerschlauch;
ix) Wickeln von halbleitendem Band (56) über die Kontaktstelle des freigelegten halbleitenden Schirms und der geschirmten Isolierhülse; und
x) Verbinden der abgelösten metallischen Schirmschicht mit der Kabelverbindungsvorrichtung.

8. Verfahren zum Abschließen eines Glasfaserkabels innerhalb der Kabelverbindungsvorrichtung von Anspruch 1, wobei der Abschluss den physikalischen Raum zwischen benachbarten Schottplatten in Anspruch nimmt und das Verfahren umfasst:
i) Fixieren einer oder mehrerer Fasertragschalen (70) an einem abgeschnittenen Ende des Glasfaserkabels (23);
ii) Spleißen eines Anschlussfaserverbinders (72) mit jeder Glasfaser innerhalb des Kabels, wobei jeder Anschlussfaserverbinder an einer Verbinderplatte (78) befestigt wird, die durch einen oder mehrere Stäbe (76) getragen wird, die sich von einer inneren Durchführungsanordnung der Verbindungsvorrichtung erstrecken; und
iii) Fixieren jeder Glasfaser (23) und der jeweiligen Anschlussfaser (72) an einer der Fasertragschalen.

9. Verfahren gemäß Anspruch 8, ferner Verbinden von Paaren aus Anschlussfaserverbindern mit einer jeweiligen Glasfaserschleife umfassend.

10. Verfahren gemäß Anspruch 8, ferner Verbinden jedes Anschlussfaserverbinders mit einem entsprechenden Anschlussfaserverbinder eines weiteren Glasfaserkabels umfassend, das gemäß dem Verfahren von Anspruch 8 abgeschlossen ist.

## Revendications

1. Appareil de raccordement de câble pour permettre la terminaison ou le raccordement des câbles sous-marins, l'appareil comprenant :
des première et seconde plaques de bâti externes (4) ayant chacune une ouverture agencée pour recevoir un câble multiconducteur (10) ;
au moins deux plaques de cloison (6) agencées entre les première et secondes plaques de bâti externes (4), chaque plaque de cloison ayant une pluralité d'ouvertures formées à l'intérieur de cette dernière, chaque ouverture étant agencée pour recevoir un conducteur individuel (22) du câble multiconducteur ; et
une pluralité de gaines de câble étanches à l'eau (28), chaque gaine de câble s'étendant entre des ouvertures correspondantes dans les plaques de cloison et agencée pour entourer le conducteur de câble individuel d'une manière étanche à l'eau.

2. Appareil selon la revendication 1, dans lequel chaque gaine de câble (28) comprend un revêtement souple imperméable et est remplie avec un fluide incompressible.

3. Appareil selon la revendication 2, dans lequel chaque gaine de câble (28) peut en outre comprendre un revêtement externe perforé (30) entourant le revêtement souple.

4. Appareil selon l'une quelconque des revendications précédentes, dans lequel une paire de presse-étoupes (24) est montée sur au moins l'une des plaques de cloison (6) de chaque côté de l'une des ouvertures de réception de conducteur de câble, chaque presse-étoupe étant agencé pour recevoir un conducteur de câble individuel (22) d'une manière étanche au fluide.

5. Appareil selon l'une quelconque des revendications précédentes, comprenant en outre un ensemble de collier de câble (8) monté sur au moins l'une des première et seconde plaques de bâti externes (4) et agencé pour serrer mécaniquement le câble multiconducteur (10) reçu dans l'ouverture de ladite plaque de bâti externe respective.

6. Procédé pour terminer un câble à l'intérieur de l'appareil de raccordement de câble selon la revendication, moyennant quoi la terminaison occupe l'espace physique entre les plaques de cloison adjacentes, le câble ayant un conducteur central (44), une couche d'isolation (42) entourant le conducteur central (44), une couche d'écran semi-conducteur sur enveloppe isolante (40) entourant la couche d'isolation (42) et une couche d'écran métallique entourant l'écran semi-conducteur sur enveloppe isolante (40),
le procédé comprenant les étapes consistant à :
i) couper le câble à une longueur prédéterminée ;
ii) dénuder une longueur prédéterminée de la couche d'écran métallique afin d'exposer l'écran semi-conducteur sur enveloppe isolante (40), de sorte que lorsque la terminaison de câble est formée, la couche d'écran métallique ne passe pas à travers une plaque de cloison de l'appareil de raccordement;
iii) retirer une longueur prédéterminée de l'écran semi-conducteur sur enveloppe isolante de l'extrémité coupée du câble afin d'exposer la couche d'isolation (42) ;
iv) retirer une longueur prédéterminée de la couche d'isolation de l'extrémité coupée du câble plus courte que la longueur de l'écran semi-conducteur sur enveloppe isolante (40) retirée afin d'exposer une longueur du conducteur central (44) ;
v) enrouler un matériau conducteur (46) sur le conducteur central exposé ;
vi) placer une tige isolante cylindrique (48) sur le matériau conducteur de sorte que la tige isolante vient en butée contre la couche d'isolation exposée ;
vii) enrouler une matière de remplissage de vide sur la jonction de l'écran semi-conducteur sur enveloppe isolante (40) et la couche d'isolation (42) et séparément sur la jonction de la couche d'isolation (42) et la tige isolante (48) ;
viii) rétracter thermiquement une longueur de tube de régulation de contrainte (52) sur une partie de la tige isolante, l'isolation exposée et une partie de l'écran semi-conducteur sur enveloppe isolante ;
ix) rétracter thermiquement un manchon d'isolation blindé (54) sur le tube de régulation de contrainte ;
x) enrouler une bande semi-conductrice (56) sur la jonction de l'écran semi-conducteur exposé et le manchon d'isolation blindé ; et
xi) raccorder la couche d'écran métallique dénudée à l'appareil de raccordement de câble.

7. Procédé pour jointer deux câbles à l'intérieur de l'appareil de raccordement de câble selon la revendication 1, moyennant quoi le joint occupe l'espace physique entre les plaques de cloison adjacentes, chaque câble ayant un conducteur central (44), une couche d'isolation (42) entourant le conducteur central (44), une couche d'écran semi-conducteur sur enveloppe isolante (40) entourant la couche d'isolation (42) et une couche d'écran métallique entourant l'écran semi-conducteur sur enveloppe isolante (40),
le procédé comprenant les étapes consistant à :
i) couper chaque câble à une longueur prédéterminée ;
ii) dénuder une longueur prédéterminée de la couche d'écran métallique sur chaque câble afin d'exposer l'écran semi-conducteur sur enveloppe isolante (40) ;
iii) retirer une longueur prédéterminée de l'écran semi-conducteur sur enveloppe isolante de l'extrémité coupée de chaque câble afin d'exposer la couche d'isolation (42) ;
iv) retirer une longueur prédéterminée de la couche d'isolation de l'extrémité coupée de chaque câble plus courte que la longueur de l'écran semi-conducteur sur enveloppe isolante (40) retiré afin d'exposer une longueur du conducteur central (44);
v) fixer le conducteur exposé de chaque câble dans une extrémité opposée respective d'un connecteur de câble métallique tubulaire (60) ;
vi) enrouler une matière de remplissage de vide sur la jonction de l'écran d'isolation et la couche d'isolation et séparément sur la jonction de la couche d'isolation et du connecteur de câble pour chaque câble ;
vii) rétracter thermiquement une longueur de tube de régulation de contrainte (52) sur le connecteur de câble, l'isolation exposée de chaque câble et une partie d'écran semi-conducteur de chaque câble ; et
viii) rétracter thermiquement un manchon d'isolation blindé (54) sur le tube de régulation de contrainte ;
ix) enrouler la bande semi-conductrice (56) sur la jonction de l'écran semi-conducteur exposé et le manchon d'isolation blindé ; et
x) raccorder la couche d'écran métallique dénudée à l'appareil de raccordement de câble.

8. Procédé pour terminer un câble de fibre optique à l'intérieur de l'appareil de raccordement de câble selon la revendication 1, moyennant quoi la terminaison occupe l'espace physique entre les plaques de cloison adjacentes, le procédé comprenant les étapes consistant à :
i) fixer un ou plusieurs plateaux de support de fibre (70) sur une extrémité coupée du câble de fibre optique (23) ;
ii) épisser un connecteur amorce (72) à chaque fibre optique à l'intérieur du câble, chaque connecteur amorce étant fixé sur une plaque de connecteur (78) supportée par une ou plusieurs tiges (76) s'étendant à partir d'un ensemble de presse-étoupe interne de l'appareil de raccordement ; et
iii) fixer chaque fibre optique (23) et l'amorce (72) respective à l'un desdits plateaux de support de fibre.

9. Procédé selon la revendication 8, comprenant en outre des paires de raccordement de connecteurs amorces avec une boucle de fibre optique respective.

10. Procédé selon la revendication 8, comprenant en outre l'étape consistant à raccorder chaque connecteur amorce à un connecteur amorce correspondant d'un câble de fibre optique supplémentaire terminé selon le procédé selon la revendication 8.
